(19) **Europäisches Patentamt / European Patent Office / Office européen des brevets**

(11) **EP 3 899 212 B1**

(12) **EUROPEAN PATENT SPECIFICATION**

(45) Date of publication and mention
of the grant of the patent:
**18.10.2023 Bulletin 2023/42**

(21) Application number: **19835712.1**

(22) Date of filing: **17.12.2019**

(51) International Patent Classification (IPC):
*F01K 3/02* (2006.01)   *F01K 3/18* (2006.01)
*F01K 7/34* (2006.01)   *F03D 9/17* (2016.01)
*F03D 9/18* (2016.01)   *F03D 9/00* (2016.01)

(52) Cooperative Patent Classification (CPC):
**F01K 3/02; F01K 3/18; F01K 7/34; F03D 9/007;
F03D 9/17; F03D 9/18;** F05B 2260/42; Y02E 10/56;
Y02E 10/72; Y02E 10/76; Y02E 20/14; Y02E 60/16;
Y02E 70/30

(86) International application number:
**PCT/GR2019/000090**

(87) International publication number:
**WO 2020/128537 (25.06.2020 Gazette 2020/26)**

(54) **AUTOMATIC WIND AND PHOTOVOLTAIC ENERGY STORAGE SYSTEM FOR UNINTERRUPTED ELECTRICITY GENERATION AND ENERGY AUTONOMY**

AUTOMATISCHES SYSTEM ZUM SPEICHERN VON WIND- UND FOTOVOLTAIKENERGIE FÜR UNUNTERBROCHENE ELEKTRIZITÄTSERZEUGUNG UND ENERGIEAUTONOMIE

SYSTÈME AUTOMATIQUE DE STOCKAGE D'ÉNERGIE ÉOLIENNE ET PHOTOVOLTAÏQUE EN VUE D'UNE GÉNÉRATION ININTERROMPUE D'ÉLECTRICITÉ ET POUR PARVENIR À L'AUTONOMIE ÉNERGÉTIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **18.12.2018 GR 20180100563**

(43) Date of publication of application:
**27.10.2021 Bulletin 2021/43**

(73) Proprietor: **Pittas, Nicholas
26500 Rion Patras (GR)**

(72) Inventor: **Pittas, Nicholas
26500 Rion Patras (GR)**

(74) Representative: **Samouilidis, Emmanouil
Alkyonis 46
175 62 Palaio Faliro (GR)**

(56) References cited:
**WO-A2-2010/125568       GB-A- 2 528 449
US-A1- 2011 113 781**

**Description**

The invention refers to a method and a system for production of energy.

GB 2528449 describes an energy storage system comprising compressors (1, 3, 6) with compressors, airtight air tanks (12, 22), heat exchangers (5, 8) which are configured to remove heat from the compressed air to thermic oil that is stored in insulated tanks (13, 15) and to water which is stored in insulated tanks (16, 18). The compressed and stored air is reheated by the oil and water. The numbers in brackets refer to the signs used in this document.

US 2011/0113781 is an energy production system with three generators: A generator (140, 138) that uses air compressed during the compression phase and two distinct generators (146, 148) that operate with medium evaporated by the air that is compressed during the compression phase. The numbers in brackets refer to the signs used in this document.

WO2010/125568 discloses a system that uses compressed air stored in tank 32 to operate a generator (41). The numbers in brackets refer to the signs used in this document.

The object of the invention is a system and a method that allow to balance the reduction of the power produced by the system because of the reduction of the pressure in the storage tank and the increase of its efficiency.

The invention is defined in the independent claims.

Dependent claims define further features that offer further advantages to the invention.

In the application for my patent $N_o$ 1008370 I presented an innovative electricity storage and generation system, supplied by wind energy and photovoltaic energy systems either in combination or separately, and the option to use said energy is decided on the basis of the wind and photovoltaic potential offered on-site.

Under this amendment, the above patent is differentiated from the initial in the following points.

It its expressly clarified.

A) That the construction of storage tanks with large geometric volume and weight is difficult to implement, since it is hard to roll 90mm sheet metal to a cylinder, while the huge weight of the tanks make them hard to transfer, plus the fact that they are very costly. For this reason, these are replaced by a coil type serpentine, namely welded pipes of appropriate thickness, i.e. 15-35mm - preferably 25mm, with on internal diameter of 200-700mm - preferably 508 mm. Every 4,938 m of this pipe correspond to $1m^3$ of geometric volume. Therefore, any geometric volume required for the storage of compressed air within the range form 170-250 bar - preferably 200 bar -can be created by transferring these pipes at the facility site, welding them to each other and placing them on the surface of the site available. The thickness of 25mm guarantees for structural strength against an internal pressure of up to 320bar, although the operating pressure of the unit will be much smaller. Furthermore, for safety reasons, it is imperative that the electrical welding is checked with ultrasounds, X rays, extensive and prolonged hydraulic pressure and certified by accredited institutions.

B) That the air compressors to be used are of advanced technology and perform two functions at the same time.

> 1) They will compress atmospheric air, indicatively at 200 bar or more if necessary, and at the same time
> 2) The compression-generated heat will be transferred to a cooling fluid, which can be either water or something else, such as refrigeration oil, via thermal exchangers that will intervene for each compression stage of each individual air compressor.

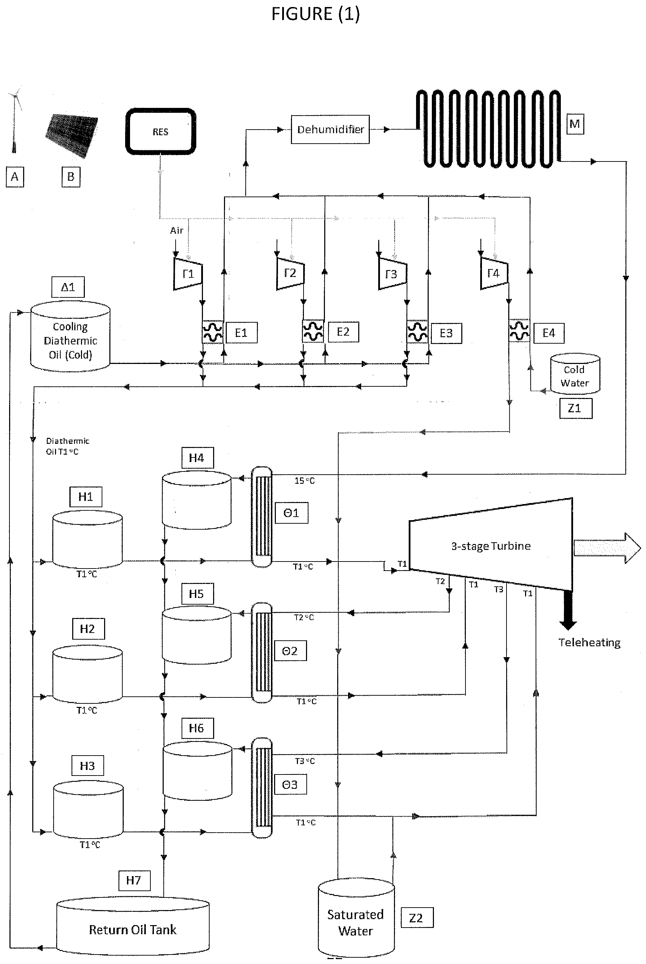

Brief reference to figure 1, showing the primary energy sources, wind turbine (A) and photovoltaic panels (B) the dehumidifier, the compressed air serpentine - coil tank (M), the air compressors $\Gamma_1$, $\Gamma_2$, $\Gamma_3$, $\Gamma_4$ accompanied by the corresponding thermal exchangers $E_1$ $E_2$ $E_3$ $E_4$ for the dissipation of the heat generated by compression, the heat-insulated storage tank for refrigeration oil $H_1$, $H_2$, $H_3$, $H_4$, $H_5$, $H_6$, $H_7$ and $\Delta_1$ and the corresponding tanks for saturated water $Z_1$, $Z_2$, as well as the thermal exchangers $\Theta_1$, $\Theta_2$, $\Theta_3$, the turbine K with the generator connected to it.

It is obvious that compression from 1 bar to 200 bar will require a number of stages and cannot be implemented directly within a single stage, as this would melt the cylinder and piston due to the excessive generated heat, as the final air temperature will be of an order of 1032°C. Water can be an excellent carrier-heat sink of the generated heat per compression stage of each individual air compressor due to its high thermal capacity, which is equal to $c_p$=4,18kcal/kg °C, but in these temperatures the phase changes (evaporation) demand advanced operational safety procedures, as well as high cost for the necessary equipment. We therefore choose the largest number of air compressors to use refrigeration oil and the smallest number of air compressors to use water, to a rate of e.g. 4/1.

The reason for this choice will be explained below.

The generation of high temperature oil and saturated water is the result of the intercooling process implemented on the compressed air in between the compressor stages. The generated quantities of the two cooling fluids are to be stored within separate insulated tanks while the compressed air is to be stored on the larger, high pressure (200 bars) tank made from serpentine coils, as described earlier. Each cubic meter of compressed air on expanding through a proper turbine (of reheated stages) from the high pressure (200 bars) down to the atmospheric one will generate about 30 kwh of electric energy.

Large volume tanks are required so that the energy storage capacity in MWh will be enough to satisfy the energy requirements of the nearby community for a reasonable length of time.

This innovative energy storage scheme employs high-pressure air compressors, each of which employs a number of intermediate stages, allowing for a regulated intercooling of the compressed air, so that the exit temperature of the air is maintained low, permitting the storage of a higher air mass inside the tank.

The optimum selection of the intercooling stages will depend on the exit temperature of the cooling fluids from each stage. For example, compressing in one stage atmospheric air initially at 20°C up to a pressure level of 60 bars, it means that the exit temperature of the air will have reached a level of about 270 $^0$C.

The countercurrent heat exchanger will bring the exit temperature of the cooling fluid (water or oil) to a similar temperature, while the compressed air will be cooled back to a temperature near the original.

The process will be repeated in all compression stages downstream, so that at the exit of the compressor the air will have reached a pressure of 200 bars but the temperature will not be much above the atmospheric (i.e. around 20° C).

The heated masses of the cooling fluids will be stored inside insulated tanks, ready for the reheating processes during the expansion of the stored air inside the air turbines that will drive the electric generators, resupplying the community at times of need.

This method will generate about 210.6 kg/h of saturated water by each compressor driven by a 73 kW electric motor to be supplied with electric energy by the Aeolic/solar plants, enough to compress 280 Nm$^3$/h of ambient air up to 200 bar generating 434.4 kg/h of cooling oil. The difference between the generated flow rates among the two cooling fluids is due to the lower $c_p$ = 2.18kcal/kg °C of the cooling oil compared to a $c_p$ = 4.18kcal / kg $^0$C for the water.

The number of the compressor units will be selected after an optimization analysis between the long hours needed to fill the storage air tank and the resupply of the surrounding community.

The time needed to fill the tank can be reduced by increasing the number of compressors. When we employ 5 compressors absorbing 73 kw of electric power for the filling of a storage tank of volume 600 m$^3$, each of them will be able to deliver to the tank compressed air at a rate of 280 Nm$^3$ / h and a pressure of 200 bars.

Since 1m3 at 200 bar occupies 51t in volume, 280Nm$^3$ / h will occupy a volume of 5x280 = 1400 lt. Hence the 5 air compressors together will fill a volume equal to 1400x5 = 7000 lt. Since the total volume of the serpentine tank is 600 m$^3$ this means that it will take 6000001t / 7000 lt/ h = 85.7h to fill the serpentine tank. In addition, during this period the intercooling heat exchangers will generate 85.7x434.4x4 = 146.920 .8kg of heated cooling oil at a temperature between 180-270 $^0$C that will be stored in the insulated tanks designated for this oil. At a later stage this hot oil will drive the reheating process in the turbine stages.

In addition, the intercooling process will generate saturated water at a rate of 85.7x210.6 = 18.048.4kg of saturated water at a temperature within the same range (180-270 $^0$C) and stored inside a similar insulated tank. It will take 5 insulated tanks of a capacity of 80 m$^3$ each for the storage of the hot oil if the number of the reheating stages is 5. To this one needs to add a similar number of 5 return tanks of a 80_m$^3$ capacity for the "cooled" oil. The fully cooled oil will be driven from these 5 tanks into a larger 5x80=400 m$^3$ tank that will supply the intercooling processes, repeating the cycle. In total 5+5+1=11 tanks will be required for the cooling oil and 1 tank for the saturated water. In other words, 12 storage tanks will be needed for the entire plant.

These tanks must be constructed with an insulating cover that will ensure the maintenance of the initial temperature (180 - 270 $^0$C) for a sufficient time. The reason we are trying to recover waste heat, is based on the fact that in conventional air compressors only 20-22% of the energy consumed is converted into pressure energy. The remaining 70-78% is lost to the environment in the form of heat dissipation. This loss tends to become greater than 75-78% as we compress the air into greater pressures.

The heating of the compressed air forces a parallel dilatation due to the temperature rise, so that it requires additional energy to be spent on the compression process.

The stored diathermic oil at a temperature of 190-270 $^0$C will be able to reheat the air as it travels from the large storage tank into the turbine for the conversion of the stored air pressure energy into electricity.

The storage of the heated oil and the subsequent reheating of the stored air as it passes through the turbine stages eliminates any possibility of freezing of the humidity content within the stored air, thus avoiding any flow blockage inside the turbine passages.

The method is to be implemented as follows. The large tank supplies with stored compressed air a tubular header of a proper length and diameter. Transversely to the header axis, the compressed air is distributed to several straight shell and tube heat exchangers that reheat the compressed air by heat supplied by the stored hot oil.

The air tubes inside these heat exchangers are of a small diameter (of the order of 19mm, with a wall thickness of about 24mm that guarantees enough strength against the high air pressure). These small diameter tubes are of about 8-9 meters in length and connected on the opposite end to another (receiving) header that supplies the turbine head. The outer diameter of the shell will be of the order of about 800-900mm, and it's exhaust header will supply the turbine head with air of a temperature of the order of 190-270 $^0$C while the hot oil will transverse the heat exchanger in the opposite direction. Such a turbine will generate electric power of the order of 1 MW in the above configuration.

The now cooled oil from the shell and tube heat exchangers will be driven to the return storage tank. This description defines the heat exchange process between the compressed air and the cooling oil. This is required because the compressed air is stored at nearly atmospheric temperatures and has the tendency for its humidity content to freeze even under small expansion ratios.

It is obvious that a large expansion ratio (from 200 bars down to the atmospheric one) requires a fairly large number of intermediate reheating processes, i.e. increased number of heat exchangers, which will also be in series. The heat exchange time between cold compressed air and hot diathermic oil is 1sec. The lower temperature diathermic oil exiting the heat exchangers enters the lower temperature diathermic oil return storage tank.

The thermodynamic analysis of the energy storage and power system showed that in order to avoid ice formation during the air expansion inside the turbine, the compressed air in the turbine should be reheated in several stages in order to 1) eliminate the possibility of ice formation and 2) increase the thermodynamic efficiency of the unit.

To achieve this, we select the following procedure from the thermodynamic analysis for a 5-step expansion and thus (for example) produce 5MW. For such a power output the steps are defined as follows: (200-110 bar) the first stage, (110-60 bar) the second, (60 -28bar) the third, (28-13 bar) the fourth and (13-1.5 bar) the final (fifth) stage. It is obvious that the pressures per step will change for each given turbine, while the compressed air will be cooler after each expansion stage.

This air will be reheated by the system of heat exchangers powered by the hot diathermic oil from the second heat insulated tank maintained at a temperature of 190-270 $^0$C so that in the second turbine stage the compressed air will re-enter the turbine at 110 bar but at a temperature near to the 190-270 $^0$C range. Behind the first turbine stage the expansion process will lead to an exit pressure of 60 bars and a temperature around 155 $^0$C. The next reheating stage will employ high temperature oil at 190-270 $^0$C from the third insulated tank and will bring the compressed air back to the initial temperature of 190-270 $^0$C and re-inserted inside the turbine at nearly 60 bar and exit at a pressure of 28 bars. The next stage will employ oil from the fourth insulated tank. The next stage will expand and cool down to 13 bar and to come out and reheat to the original high temperature of 190-270 $^0$C with the heat exchangers from the fifth insulated tank. Then it will expand again from 13 bar to 1.5 bar. It is evident that in each reheating stage there is also a corresponding heat insulated return tank for the lower temperature oil.

It is apparent that the reheating heat exchangers will be designed according to the different temperature and pressure parameters determined by the thermodynamic analysis.

The heat insulated tanks will maintain one high temperature for the diathermic oil and another (lower) one for returning diathermic after it passes through the heat exchangers, where it has passed to the compressed air its proper thermal load.

The lower heat thermally insulated tanks are connected to each other and their content ends up inside the cold diathermic oil tank, which in turn supplies the intercooling heat exchangers for each compression stage.

This oil supply is directed to each of the compressors to subtract the produced heat so as to complete the heat subtraction cycle from the air-compressors and subsequently is fed into the higher heat tanks to heat up the air supply from the serpentine air reservoir.

Because the reheating process with all accompanying equipment is very costly, there must be a compromise on the choice of the number of stages and the certainty of avoiding ice formation when the compressed air is expanded. The circulation of the diathermic cooling oil within the above circuit, for the entire storage and power plant to be self-sufficient, will be implemented by employing compressed air as the driving force.

The latter will be stored inside a tank of appropriate volume, and pressure of around 30 bar, which is supplied by the large serpentine tank. When the air pressure inside the latter reaches 30 bar the air supply will be interrupted from it.

From this tank begins a pneumatic circuit that drives small rotor-impeller motors. In the extension of the axes of these rotors are connected the pumps which push the diathermic oil through the heat exchangers.

In order to illustrate the operation of this subsystem when the plant delivers 1MW, the flux of diathermic oil required will be approximately 4 tonnes per hour, while a generation of 5MW will require 18 tonnes to be circulated.

Next the operation of the water cooling network will be discussed during the intercooling of the compressed air. This network will supplement the air-compressors in a proportion of 4 to 1 diathermic oil and water. The operation of these few air compressors is similar to those of the corresponding air compressors using diathermic cooling oil. However, the volume of saturated water formed is stored in separate insulated, suitable tanks.

The corresponding thermodynamic analysis deduces that intercooling will generate 0.132 kg of saturated water per kg of air compressed from an atmospheric pressure up to 200 bar.

This is to mean that more energy was spent than that which was obtained from the turbine expansion process. With this excess energy we can heat a volume of water gaining from the increase of the compressed air expansion in the turbine,

This results in a mass of saturated water, i.e. steam at temperatures above 190 $^0$C and a pressure of 14 bar or higher.

From the saturated water data, it becomes clear that the water saturation pressure, that corresponds to the maximum compressed air temperature of 270 $^0$C, is about 60 bars, according to the Mollier diagram.

This saturated water will be injected into the expanding air inside a turbine stage, so that by increasing the expanding fluid (i.e. humid air) mass flux will lead to the generation of a greater power output of electricity. At the lower air pressure at the point of injection the saturated water will evaporate into steam to a large extend. The rest of the water will evaporate into humidity inside the dry air, as the latter expands inside the turbine. The water injection will be regulated so that at the turbine exit the humid air is above the dew point for the exhaust temperature of conditions at the pressure of the surrounding atmosphere.

Since the final pressure of expansion of the mixture is atmospheric pressure and the temperature is around 35 °C it corresponds to the value of enthalpy $h_1$ = 612kcal / kg $^0$C and the initial value of the steam enthalpy before the mixing equals $h_2$ which corresponds to 668 kcal / kg $^0$C. The enthalpy difference $\Delta h = h_2 - h_1$ will be in the range from 70 to 200kcal / kg $^0$C, depending on the temperature of the steam and on the level of development of the compressor unit.

Since the power output is given by the expression $P = M \times \Delta h \times n_t / 860$ where M is the mass of steam, $n_t$ the turbine performance and $\Delta h$ is the difference in enthalpy. If we consider the turbine yield (efficiency) to be close to 0.86, as is usually the case, then the generated power will be expressed as $P = M \times \Delta h / 1000$. It is also reasonable that by increasing the mass of the gas mixture (compressed air with steam) and in particular the mass of the steam produced as excess energy (which is stored in the form of steam by compression) we increase the power finally produced. This mass of steam arises from the air compressors during the compression process and multiplied by the enthalpy difference represents the excess energy that was consumed during compression. In this way an overall increase in turbine power by 40% can be achieved. Most significantly apart from an efficient control of the thermodynamic cycle we also achieve an all-important stabilization of the produced power despite the occurrence of pressure drop in the serpentine tank.

This power enhancement will be increased even further if the saturated water is overheated by the addition to the plant of proper solar collectors that may increase the water temperature in the order of 300-350 $^0$C.

So, if the turbine expands the compressed air in 5 stages with intermediate reheats per stage for a supply of 25,000 Nm$^3$ / h and initial values of P = 200bar, T = 250 $^0$C, it will generate a power output of 4.4MW electric.

If we inject the excess water at a rate 0.132kg of steam / kg air x 25000Nm3 air x 1.2kg (air) / Nm3 (air) = 3960kg of water / h and this evaporates fully, as explained above, this will result into a power output increase of 1MW. That is, the total power produced will reach 5.4MW. In other words, the implementation of this concept will result into a 40% increase in total power generation capacity. This method is unique and has not been proposed anywhere in the world.

The operation of this system is described in the following.

The electricity generated from the A/Γ' (Wind Turbine) (A), in combination with the electricity supply by the PV (PhotoVoltaic) generators (B) gradually and sequentially compresses atmospheric air in the compressors (Γ$_1$, (Γ$_2$), (Γ$_3$), (Γ$_4$) which achieve a compression of the ambient air up to about 180-250 bar, and preferably closer to 200 bar, and then pump it into the airtight serpentine coil tank (M).

This compressed air is directed to the expansion turbines by passing first through the heat exchanger system (Θ$_1$) and reheated by the heat accumulated through the diathermic oil at a temperature $T_1$ = (190-270) $^0$C inside the insulated tank (H$_1$). The air enters the turbine and after expanding inside the first stage exits at a lower temperature $T_2$ and is reheated to the initial temperature $T_1$, so that it re-enters the next turbine stage at the same exit pressure and so on in the following stages. In front of the final stage it is reheated again up to temperature $T_1$. After the reheating process, saturated water from the insulated tank (Z$_2$), supplied by water that intercooled the compressed air, will be injected into the air flow and mix with the reheated compressed air with steam at the same pressure and temperature so that the mixture can be expanded to 35 $^0$C at 1.5 bar.

The final exhaust of the humid air from the turbine (that is appropriately clean for any subsequent use) will be exploited for district heating. The shaft of the turbine (K) is connected to a generator at the terminals of which the electricity will be generated. The 170-250 bars for the serpentine tank, as well as the attainment of temperatures of 190-270 $^0$C for the diathermic cooling oil or the saturated water resulting from the intercooling operation of the high pressure compressors, do not represent a maximum operating limit but are a practical (currently feasible state of the art) design operation level.

And these technical specifications will be readily adaptable over time based on the evolution of e.g. material science (e.g. graphene) with regard to the serpentine high pressure tank, so that these can be manufactured at a lower cost with a larger volume serpentine-tank at higher pressures, aspects that will increase the energy density of the compressed air and ultimately will increase the electrical energy autonomy, while at the same time will allow higher operating temperatures that will further improve the overall thermodynamic efficiency of the unit.

The selection of the peak operating pressure in the high-pressure storage tank is the critical parameter for the achievement of the high energy density necessary to obtain energy autonomy with a relatively limited geometric volume and correspondingly reduced cost.

Although such a tank may have been manufactured for different applications it has never been constructed targeting the above mentioned technical characteristics and specifications and particularly so into the formation of a single stage serpentine tank for highly compressed air storage and subsequent generation of electricity. The serpentine tank (M) is suitably shaped and dimensionalized for storing compressed air to greatly exceed energy requirements (many cubic meters of air stored at e.g. 200 bar, which is energetically equivalent to many MWh stored) during the most typical insufficient wind or sunshine time periods according to local meteorological data. The operation of the device is as follows.

We activate on/off the A/Γ (A) as well as the photovoltaic generators (B) which operate the compressors ($\Gamma_1$), ($\Gamma_2$), ($\Gamma_3$) ,($\Gamma_4$) with the electricity they provide to a common power line, in a scalable and sequential fashion due to the high requirements in electricity load at startup. This can be performed either from the electricity generated by the A/Γ or the photovoltaic generator (B), or in combination from both sources, as illustrated in Fig. (1), where compressor units ($\Gamma_1$1, ($\Gamma_2$), ($\Gamma_3$), ($\Gamma_4$) compress air to the design high compression ratio target and deliver it into the airtight serpentine tank (M), which is conducive to the reduction of the size of the tanks for a specific power autonomy.

To fill the tank e.g. with 600 m³ by a system of 4 compressors of 73kw power each we can compress and give 280Nm3 / h at 200 bar i.e. and then deliver it to the serpentine tank (M) 280Nm3 / h x5lt / m3 = 14001t / h and so 4 air compressors will deliver a total of 4x1400 = 56001t / h and since the volume of the serpentine tank is 600Nm3 = 600.0001t it means that 60000/5600 = 107.14h will be required.

And so it will take 107.14 hours of compressor operation time.

At the same time since each compressor produces / h simultaneous diathermic cooling oil 434.4 kg / h or 210.6 kg / h water saturated, they will have been produced by the operation of the three compressors 107x3x434.4 = 139.442,4kg diathermic cooling oil at temperature $T_1$ to be stored in the high temperature insulated tanks $H_1$, $H_2$, $H_3$, and further three backups plus 107x210.6 = 22.534.2 kg of saturated water (steam) will be stored in the heat insulated tank ($Z_2$) at a temperature $T_1$.

By filling the serpentine tank, we activate the compressed air from the serpentine tank to the group of heat exchangers $\Theta_1$, which in counter-flow to the diathermic oil flows through at the maximum temperature $T_1$, originating from the $H_1$ insulated tank. And this tank transfers its heat load to the compressed air, which enters the gas turbine head (K) at a pressure of e.g. 200 bar and temperature $T_1$. The expansion is carried out until the pressure reaches the pressure value at the end of the first stage expansion as determined by the thermodynamic analysis and the corresponding lower temperature equal to $T_2$. At the end of this the total flow exits the turbine to reheat from temperature $T_2$ to $T_1$ with $T_2 < T_1$ and again be driven into the turbine at the same outlet pressure but reheated to the maximum temperature $T_1$

It then expands again until the pressure becomes equal to that at the end of the second stage expansion and of course at a temperature $T_3$ lower as $T_3 < T_2 < T_1$. As the total flow rate of the compressed air re-exits from the turbine (K) it is reheated up to the maximum temperature $T_1$, crossing the group of heat exchangers ($\Theta_3$) in counter-flow from that to the diathermic oil exiting the insulated tank $H_3$.

Then it is driven again for expansion by returning to the turbine at the same pressure but at maximum temperature $T_1$, but before it enters it is mixed and drawn by the steam stored in the insulated tank ($Z_2$) at about the same pressure and maximum temperature $T_1$, and the combined fluid mixture expands until to 1.5 bar and 38 °C. This operation results in a 40% increase in the efficiency of the turbine (K), as shown by the calculations in the attached example. The diathermic cooling oil after transferring its heat load is then returned to the corresponding heat insulated tanks $H_4$, $H_5$, $H_6$, $H_7$ and returned to the tank ($\Delta_1$) again.

When the compressed air enters the turbine head, the turbine shaft (K) as well as the generator connected directly to the rotor shaft are set to rotation to generate electricity at its terminals.

With the exhaust air coming out of the turbine at the temperature e.g. about T = 38 °C, and a suitable pressure of 1.5 bar, district heating can also be realized. The temperature of the outlet air depends on the pressure we select to release it.

This makes the system run smoothly and reliably since it eliminates the possibility to create ice on the turbine blades resulting in a malfunction of the system.

Figure (1) illustrates the basic structure of the plant layout for wind or photovoltaic power transformer or a combination of both RES, in electricity with uninterrupted power supply and energy autonomy.

And consequently when there is apnea or insufficient sunshine, from the compressed-air tank (M), compressed air is extracted and enters the turbine (K) after passing through groups of heat exchangers and is reheated, and this process is repeated at specified stages. The compressed air causes the turbine shaft (K) to rotate, rotating in turn the generator (6) connected to it producing electricity.

This compressed air storage process can be activated in a cyclic sequence at any time I is required by automatically starting the compressors from the electricity generated by the wind turbine (A) and the corresponding photovoltaic (B) generator and at the same time generate electricity from the generator connected with the axis of rotation of the turbine (K).

For complete automation and operation of the set up the whole system is accompanied by filters, gears, couplers, reducers, sensors, thermometers, presses, PLC's, inverters and more, whose electronic endpoints all end up in the layout of the control unit.

This plant provides uninterrupted electricity generation from these RES without intermittency based on wind speed or insufficient sunshine and becomes fully reliable as this device smoothes the changing load as it entails both operational and economic potential into the grid, which accrues due to the stochastic nature of RES.

In my patent application No 1008370 the following have been described.

As it is known, by compressing air it is heated and this heat must be removed to the environment so that the temperature remains constant. In practice to cool a compressor we supply an internal compact air / air heat exchanger in order to optimize the heat transfer of the liquid / air heat exchanger, to extract the heat produced by the compressors (liquid coolers) as waste and to heat the incoming compressed air into the turbine head, with the intent to increase enthalpy.

For isothermal compression perfect gases we have:

$$PV = nRT = const$$

$$W_{ab} = \int_a^b P \cdot dV = \int_a^b n \cdot R \cdot T \frac{dV}{V} = n \cdot R \cdot T \int_a^b \frac{dV}{V} = n \cdot R \cdot T \cdot \left( \ln V_b - \ln V_a \right) =$$

$$= n \cdot R \cdot T \cdot \ln\left( \frac{V_b}{V_a} \right) = n \cdot R \cdot T \cdot \ln\left( \frac{P_a}{P_b} \right) = P \cdot V \cdot \ln\left( \frac{P_a}{P_b} \right)$$

where P is the absolute pressure, V is the volume of the tank, R is the universal gas constant, T is the absolute temperature, and W is the stored energy.

So we have about:

$$2.27 \ln\left( \frac{P_a}{P_b} \right) kJ \qquad at\ 0°\ o\ at\ 273{,}15°K$$

or

$$2.478 \ln\left( \frac{P_a}{P_b} \right) kJ \qquad at\ 25°\ or\ 298°C\ mole$$

or

$$100 \ln\left( \frac{P_a}{P_b} \right) kJ\ /\ m^3$$

In the submitted modification of this patent No 1008370 the method of construction, manufacturing and implementation are clearly set out.

A unit with very high compressed air storage capacity compared to another with limited storage capacity will produce more electricity. Large-scale energy storage in the form of compressed air can generate electricity for a long time without the wind, or enough sunshine and respond to load demand and achieve a matching power demand curve with that of supply.

The ability to operate a A/Γ with simultaneous presence of PV for generate electricity increases the energy autonomy.

Since the power of the energy produced depends on the supply, because as it is known P (Kw) = M (Δh) s / 860X n = M (Δh) s / 1000 where $n_t$ = 0.86 and M is the mass flow rate of compressed air and Δh the enthalpy difference. Depending on our requirements, we increase the supply of compressed mass air flow rate, to the turbine head so that the demand curve matches the supply curve.

Technically this is achieved with a rotation shaft controller so that we almost always have a frequency of 50 Hz as dictated by the needs of the grid and which operates a valve on the turbine head.

Thus, when load demand decreases, the speed controller instructs the valve to limit the mass flow rate of compressed air entering the turbine, and when demand increases with the same process the valve permits to increase mass flow rate, thereby increasing power.

This also results in increased energy autonomy offered by the device avoiding wasting more energy than the user needs.

The response time of converting compressed air and surging it into the grid with this system device is in the range of less than 10 to 15 secs, compared to approximately 1 hour for the hydroelectric units, 10 hours for thermoelectric generating sets (axial compressors, combustion chambers, gas turbines, generators), about 2 days for thermoelectric power plants and one week for nuclear power plants.

The rate of replenishment of the reservoir capacity (total capacity of airtight serpentine tanks) depends on the available wind-solar energy availability and therefore on the number and capacity of the wind-photovoltaic generators to capture it. The more wind-photovoltaic energy captured, the faster the energy of the reservoir is replenished.

One scenario of using this directional wind-photovoltaic energy system device is to reduce the unpredictable nature of a wind-photovoltaic park when the wind generators do not rotate or there is insufficient sunlight.

This directional device generates power with more reliability than high-efficiency photovoltaics can produce in their respective conventional wind farms with an accompanying improved utilization and transmission capacity. That is, a conventional 100 MW wind-photovoltaic park generates only a 30 to 40% power in contrast to our proposed layout that will produce 90-100 MW. In practice the present unit will store when the demand in electrical load is low and generate power when it will indeed be required.

It should also be noted that the system is conveniently modular, easily modifiable and adaptable and that, starting from a given power unit and storage capacity, one can add components in such an appropriate way so that it can address all future energy requirements that may arise.

EXAMPLE OF ENERGY AUTONOMY FROM WIND AND PV GENERATORS AND PERFORMANCE RATING OF THE PROPOSED UNIT

We have power coming from either a photovoltaic generator or a PV or a combination of both sources at 900kW total power level and have a volume capacity for compressed air storage equal to 600m3.

Putting into operation e.g. 5 air compressors totaling a power of 5x73kW = 365kW = 0.365MW which compress at 200 bar and introduce $280Nm^3$ / h each i.e. 280x5 = 1400 lt / h and for the five 5x1400 = 7000lt /h compressed air production from compressors. And therefore 600.000 / 7000 = 85.7 h are required to fill up the $600m^3$ tank.

This means that the energy consumed equals 85.7x0.365 = 31.28MWh,

On the other hand the energy to be produced in a turbine with input data P = 200bar, T = 200-270 $^0C$ and over five expansion stages i.e. 200-34bar, 34-11 bar, 11-1.1bar equal to 1MW.

Since the hourly consumption of compressed air by the turbine is $5000Nm^3$ / h and the available volume to expand is $600x200 = 120000m^3$, this means that the turbine will operate for 120,000 / 5000 = 24h. That is to say, the generator will produce 24MWh. In addition, we will have the steam injected into the final stage of the expansion. Saturated water (steam) output per hour will be 210.6 kg/ h and so we will have an additional power to the turbine shaft equal to P as defined below.

Since the power of the energy produced depends on the mass flow rate, because it is known that P (Kw) = M $(\Delta h)$ s / 860X $n_t$ = M $(\Delta h)$ s / 1000 with $n_t$ = 0.86 and M is the mass flow rate of the compressed air and $\Delta h$ the enthalpy difference, we will have P = 5000x1.2x0.132x70 / 1000 = 55.4kw and multiplying it for 24 hours we will produce 1330.5 kw = 1.330MW, so the total power generated at the generator terminals is 24 + 1.33 = 25.330MWh, i.e. total unit power yield is n = 25.33 / 31.28 = 0.80.

It is obvious that the above unit can meet up to 1MW maximum power requirements and significantly a 25MWh total consumption.

To achieve energy autonomy with the above data it is essential for ensuring uninterrupted power supply security that our daily consumption should not exceed 3-4 MWh per day, so that we have a tank-replenishment time of at least 8 days, over which time period we are most likely to have sunshine or wind. If this is not the case, and this time period is not enough (depending on the wind and sunshine data of the place) we can increase the serpentine tank to the extent necessary for ensuring a sustainable energy autonomy.

**Claims**

1. Automatic wind and photovoltaic energy storage system for the generation of uninterrupted electricity and power supply, consisting of wind and photovoltaic generators, which are combined or independent, communicating airtight tanks **(M)**, a multi-stage gas turbine **(K)**, compressors **($\Gamma_1$, $\Gamma_2$, $\Gamma_3$, $\Gamma_4$)** and heat exchangers **($E_1$, $E_2$, $E_3$, $E_4$)** between

the airtight tanks **(M)** and the compressors **($\Gamma_1$, $\Gamma_2$, $\Gamma_3$, $\Gamma_4$)**, separate heat insulated tanks **($X_1$, $X_2$, $X_3$, $Z_2$)** and a circuit of diathermic oil,

the system being configured to start its operation mechanically or electrically by the compressors when driven by high pressure compressed air held in storage in the airtight tanks, after being dehydrated by almost total dehumidifier filters,

whereby said tanks are of a coil type, constituting a single serpentine tank **(M)**, consisting of common commercial tubes configured to safely resisting pressures over 150 bar, which are welded locally in parallel rows,

the compressors **($\Gamma_1$, $\Gamma_2$, $\Gamma_3$, $\Gamma_4$)** being configured to compress atmospheric air at high pressures and pass it to the serpentine tank **(M)**, the heat exchangers **($E_1$, $E_2$, $E_3$, $E_4$)** being configured to extract at the same time the heat generated by compression by the diathermic oil and water, which diathermic oil and water are stored in the heat insulated tanks **($X_1$, $X_2$, $X_3$, $Z_2$)** and which are configured to extract the heat produced from the compression of air with diathermic oil-cooling and water,

whereby the system further has

• heat exchangers **($\Theta_1$, $\Theta_2$, $\Theta_3$)** between the serpentine tank **(M)** and the gas turbine **(K)**, which are configured to transfer heat from the diathermic oil stored in the heat insulated tanks **($X_1$, $X_2$, $X_3$)** to the air that is directed either from the serpentine tank **(M)** or the outlet of the gas turbine **(K)** to the gas turbine **(K)**, and

• a connection line between one of the heat insulated tanks **($Z_2$)** that stores water and the gas turbine **(K)**, said connection line being connected with a further connection line provided between one of the further heat exchangers **($\Theta_3$)** and the gas turbine **(K)**, so that at the last stage before the final expansion of the air in the gas turbine **(K)** and after the air passes from the one of the further heat exchangers **($\Theta_3$)** and before entering the gas turbine **(K)**, steam stored in the insulated tank **($Z_2$)** can be injected into the air flow causing mixing of the air and steam in the direction of expansion into the gas turbine (K),

whereby the system is configured such that the expansion at all stages will cause the gas turbine **(K)** to rotate and consequently rotate a generator connected to it generating electricity at its electrical terminals cumulatively from each stage plus along with the steam expansion stage, and

whereby the system further comprises a pneumatic tank, a pneumatic circuit, a pump configured to supply the heat exchangers with oil and water and a small impeller coupled to an elongated axis of the pump and configured to be driven by the pneumatic circuit such that forced flow in the circuits of diathermic oil and water is ensured by means of a pneumatic tank charged through a branch of the serpentine tank at a pressure lower than the pressure of the serpentine tank.

2. Automatic wind and photovoltaic storage system for generation of uninterrupted electricity and energy autonomy according to claim 1, wherein the serpentine tank **(M)** ends up with a barrier at its end, whereby perpendicular to it and at an appropriate distance from its end and at appropriate distances are the necessary heat exchangers ($\theta_1$, $\theta_2$, $\theta_3$).

3. Automatic wind and photovoltaic energy storage system for generation of uninterrupted electricity and energy autonomy according to claim 1 or 2, wherein the system is configured so that compressed air extracted out of the serpentine tank **(M)** through the flow distributor fixed on the end of this tank, enters the respective heat exchangers ($\theta1$, $\theta2$, $\theta3$), recovers the heat load from the reverse flow of high temperature diathermic oil and ends up in the compressed air collector at maximum temperature $T_1$ before entering of the turbine **(K).**

4. Automatic wind and photovoltaic energy storage system generation of uninterrupted electricity and energy autonomy according to any one of claims 1 to 3 wherein the system is configured so that the compressed air when exiting the compressed air enters the gas turbine **(K)** and expands down to a lower pressure and temperature and the partially expanded air is reheated back to the temperature $T_1$ by the hot oil that was stored in a storage tank.

5. Automatic wind and photovoltaic energy storage system for generation of uninterrupted electricity and energy autonomy according to anyone of claim 1 to 4, wherein the shaft of the multi-stage gas turbine **(K)** is equipped with a speed controller, which operates a valve on the gas turbine head to modulate the desired power, so as to manage the introduction of the appropriate mass flow rate compressed air supply corresponding to the output of the desired power, so that the demand curve matches the supply curve.

6. Method of storing wind and photovoltaic energy for uninterrupted power generation and energy autonomy employing wind and/or photovoltaic generators, which drive air compressors **($\Gamma1$, $\Gamma2$, $\Gamma3$, $\Gamma4$)** and a multi-stage gas turbine **(K)** including
the following method steps:

i) compressing and heating air,

ii) directing the air heated in method-step i) to heat exchangers and water saturators $(E_1, E_2, E_3, E_4)$,

iii) heating diathermic cooling oil and water by the heat exchangers,

iv) storing the diathermic cooling oil and water heated in method-step iii) in separate insulated tanks $(H_1, H_2, H_3, Z_2)$,

v) after the method-step ii), driving the air into a gas-tight coil tank (M),

vi) driving the air from the gas-tight coil-tank **(M)** through a group of heat exchangers $(\Theta_1)$, where the hot diathermic cooling oil flows in reverse, reheating along the way the compressed air before it enters a first stage of the multi-stage gas turbine **(K)** to partially expand to a specified pressure and temperature $(T_2)$,

vii) after method-step vi) directing the air through a second reheating heat exchanger $(\Theta_2)$, whereby the reheating process is nearly isobaric and raises the compressed air temperature up to the initial oil temperature $(T_1)$,

viii) after method-step vii) directing the air through a second turbine stage of the multi-stage gas turbine,

ix) repeating method-step vi) and unless the air has reached the final turbine stage repeating also method-step viii),

x) injecting inside a head of the final turbine stage an amount of saturated water supplied by an insulated tank $(Z_2)$ to mix the saturated water with the air so as to form a humid air mixture which expands inside the final stage of the multi-stage gas turbine **(K)**.

7. Method according to claim 6 wherein the humid air mixture is expanded to a pressure about 1.1 bar at a temperature of 38 $^0$C.

8. Method according to claims 6 or 7, wherein the outlet compressed air is used for district heating.

**Patentansprüche**

1. Automatisches System zum Speichern von Wind- und Fotovoltaikenergie für die Erzeugung von ununterbrochener Elektrizitäts- und Leistungsversorgung, bestehend aus Wind- und Fotovoltaikgeneratoren, die kombiniert oder unabhängig sind, kommunizierenden luftdichten Tanks (M), einer mehrstufigen Gasturbine (K), Kompressoren $(\Gamma_1, \Gamma_2, \Gamma_3, \Gamma_4)$ und Wärmetauschern $(E_1, E_2, E_3, E_4)$ zwischen den luftdichten Tanks (M) und den Kompressoren $(\Gamma_1, \Gamma_2, \Gamma_3, \Gamma_4)$, getrennten wärmeisolierten Tanks $(X_1, X_2, X_3, Z_2)$ und einem Kreislauf von diathermischem Öl,

wobei das System ausgelegt ist, seinen Betrieb mechanisch oder elektrisch durch die Kompressoren zu starten, wenn es durch Hochdruck-Druckluft angetrieben wird, die in den luftdichten Tanks gelagert wird, nachdem sie durch annähernd vollständige Entfeuchtungsfilter dehydriert wurde,

wobei die Tanks von einem Spulentyp sind, der einen einzigen Serpentinentank (M) bildet, bestehend aus allgemeinen handelsüblichen Rohren, die ausgelegt sind, Drücken über 150 bar sicher zu widerstehen, die örtlich in parallelen Reihen geschweißt sind,

wobei die Kompressoren $(\Gamma_1, \Gamma_2, \Gamma_3, \Gamma_4)$ ausgelegt sind, atmosphärische Luft bei hohen Drücken zu komprimieren und sie zu dem Serpentinentank (M) zu leiten, die Wärmetauscher $(E_1, E_2, E_3, E_4)$ ausgelegt sind, gleichzeitig die Wärme, die durch Kompression erzeugt wird, durch dass diathermische Öl und Wasser zu extrahieren, wobei das diathermische Öl und Wasser in den wärmeisolierten Tanks $(X_1, X_2, X_3, Z_2)$ gelagert sind, und die ausgelegt sind, die Wärme, die durch die Kompression von Luft produziert wird, mit diathermischer Ölkühlung und Wasser zu extrahieren,

wobei das System weiter Folgendes aufweist

- Wärmetauscher $(\Theta_1, \Theta_2, \Theta_3)$ zwischen dem Serpentinentank (M) und der Gasturbine (K), die ausgelegt sind, Wärme, von dem diathermischen Öl, das in den wärmeisolierten Tanks $(X_1, X_2, X_3)$ gelagert ist, zu der Luft zu überführen, die entweder von dem Serpentinentank (M) oder dem Auslass der Gasturbine (K) zu der Gasturbine (K) gelenkt wird, und

- eine Verbindungsleitung zwischen einem der wärmeisolierten Tanks $(Z_2)$, der Wasser lagert, und der Gasturbine (K), wobei die Verbindungsleitung mit einer weiteren Verbindungsleitung verbunden ist, die zwischen einem der weiteren Wärmetauscher $(\Theta_3)$ und der Gasturbine (K) vorgesehen ist, sodass bei der letzten Stufe vor der abschließenden Expansion der Luft in der Gasturbine (K) und nachdem die Luft von dem einen der weiteren Wärmetauscher $(\Theta_3)$ ausströmt und bevor sie in die Gasturbine (K) eintritt, Dampf, der in dem isolierten Tank ($Z_2$) gelagert ist, in den Luftstrom eingespritzt werden kann, was ein Mischen der Luft und des Dampfes in der Expansionsrichtung in die Gasturbine (K) bewirkt,

wobei das System so ausgelegt ist, dass die Expansion in allen Stufen bewirkt, dass die Gasturbine (K) dreht und folglich ein Generator dreht, der mit dieser verbunden ist, um Elektrizität an seinen elektrischen Anschlüssen kumulativ von jeder Stufe und gemeinsam mit der Dampfexpansionsstufe zu erzeugen, und
wobei das System weiter einen pneumatischen Tank, einen Pneumatikreis, eine Pumpe, die ausgelegt ist, dem Wärmetauscher Öl und Wasser zuzuleiten, und ein kleines Laufrad umfasst, das an eine Längsachse der Pumpe gekoppelt und ausgelegt ist, durch den Pneumatikkreis angetrieben zu werden, sodass ein Zwangsstrom in den Kreisläufen von diathermischem Öl und Wasser mit Hilfe eines pneumatischen Tanks sichergestellt ist, der durch eine Abzweigung des Serpentinentanks bei einem geringeren Druck als dem Druck des Serpentinentanks geladen wird.

2. Automatisches System zum Speichern von Wind- und Fotovoltaikenergie für ununterbrochene Elektrizitätserzeugung und Energieautonomie nach Anspruch 1, wobei der Serpentinentank (M) mit einer Barriere an seinem Ende endet, wobei sich senkrecht dazu und mit einem passenden Abstand von seinem Ende und bei passenden Abständen die notwendigen Wärmetauscher ($\theta_1$, $\theta_2$, $\theta_3$) befinden.

3. Automatisches System zum Speichern von Wind- und Fotovoltaikenergie für ununterbrochene Elektrizitätserzeugung und Energieautonomie nach Anspruch 1 oder 2, wobei das System so ausgelegt ist, dass Druckluft, die aus dem Serpentinentank (M) durch den Strömungsverteiler extrahiert wird, der an dem Ende dieses Tanks befestigt ist, in die entsprechenden Wärmetauscher ($\theta1$, $\theta2$, $\theta3$) eintritt, die Wärmelast von dem Rückstrom von diathermischem Hochtemperatur-Öl gewinnt und beim Druckluftsammler bei maximaler Temperatur $T_1$ endet, bevor sie in die Turbine (K) eintritt.

4. Automatisches System zum Speichern von Wind- und Fotovoltaikenergie für ununterbrochene Elektrizitätserzeugung und Energieautonomie nach einem der Ansprüche 1 bis 3, wobei das System so ausgelegt ist, dass die Druckluft, wenn sie aus dem Druckluftsammler austritt, in die Gasturbine (K) eintritt und auf einen geringeren Druck und eine niedrigere Temperatur herab expandiert und die teilweise expandierte Luft durch das heiße Öl, das in einem Lagertank gelagert wurde, auf die Temperatur $T_1$ wiedererwärmt wird.

5. Automatisches System zum Speichern von Wind- und Fotovoltaikenergie für ununterbrochene Elektrizitätserzeugung und Energieautonomie nach einem der Ansprüche 1 bis 4, wobei die Welle der mehrstufigen Gasturbine (K) mit einem Drehzahlregler ausgestattet ist, der ein Ventil an dem Gasturbinenkopf betätigt, um die gewünschte Leistung zu modulieren, um so das Einleiten der Druckluftversorgung bei passender Massenströmungsrate entsprechend dem Ausgang der gewünschten Leistung zu managen, sodass die Bedarfskurve mit der Versorgungskurve übereinstimmt.

6. Verfahren um Speichern von Wind- und Fotovoltaikenergie für ununterbrochene Leistungserzeugung und Energieautonomie, das Wind- und/oder Fotovoltaikgeneratoren einsetzt, die Luftkompressoren ($\Gamma1$, $\Gamma2$, $\Gamma3$, $\Gamma4$) und eine mehrstufige Gasturbine (K) antreiben, enthaltend die folgenden Verfahrensschritte:

i) Komprimieren und Erwärmen von Luft,
ii) Lenken der in Verfahrensschritt i) erwärmten Luft zu Wärmetauschern und Wassersättigern ($E_1$, $E_2$, $E_3$, $E_4$),
iii) Erwärmen von diathermischem Kühlungsöl und Wasser durch die Wärmetauscher,
iv) Lagern des diathermischem Kühlungsöls und Wassers, die in Verfahrensschritt iii) erwärmt wurden, in getrennten isolierten Tanks ($H_1$, $H_2$, $H_3$, $Z_2$),
v) nach dem Verfahrensschritt ii), Treiben der Luft in einen gasdichten Spulentank (M),
vi) Treiben der Luft von dem gasdichten Spulentank (M) durch eine Gruppe von Wärmetauschern ($\Theta_1$), wo das heiße diathermische Kühlungsöl zurückfließt, Wiedererwärmen entlang des Weges der Druckluft, bevor sie in eine erste Stufe des mehrstufigen Gasturbine (K) eintritt, um sie auf einen bestimmten Druck und eine bestimmte Temperatur ($T_2$) teilweise zu expandieren,
vii) nach Verfahrensschritt vi), Lenken der Luft durch einen zweiten Wiedererwärmungswärmetauscher($\Theta_2$), wobei der Wiedererwärmungsprozess nahezu isobarisch ist und die Drucklufttemperatur auf die anfängliche Öltemperatur ($T_1$) erhöht,
viii) nach Verfahrensschritt vii), Lenken der Luft durch eine zweite Turbinenstufe der mehrstufigen Gasturbine,
ix) Wiederholen von Verfahrensschritt vi), und falls die Luft die letzte Turbinenstufe nicht erreicht hat, auch Wiederholen von Verfahrensschritt viii),

x) Einspritzen in einen Kopf der letzten Turbinenstufe einer Menge an gesättigtem Wasser, das von einem isolierten Tank ($Z_2$) zugeleitet wird, um das gesättigte Wasser mit der Luft zu mischen, um so ein feuchtes Luftgemisch zu bilden, das im Inneren der letzten Stufe der mehrstufigen Gasturbine (K) expandiert.

**7.** Verfahren nach Anspruch 6, wobei das feuchte Luftgemisch auf einen Druck von etwa 1,1 bar bei einer Temperatur von 38 °C expandiert wird.

**8.** Verfahren nach einem der Ansprüche 6 oder 7, wobei die Auslassdruckluft für Fernwärme verwendet wird.

**Revendications**

1. Système automatique de stockage d'énergie éolienne et photovoltaïque pour une production d'électricité et d'alimentation électrique ininterrompues, consistant en des générateurs éoliens et photovoltaïques, qui sont combinés ou indépendants, communiquant avec des réservoirs étanches à l'air (M), une turbine à gaz à étages multiples (K), des compresseurs ($\Gamma_1$, $\Gamma_2$, $\Gamma_3$, $\Gamma_4$) et des échangeurs de chaleur ($E_1$, $E_2$, $E_3$, $E_4$) entre les réservoirs étanches à l'air (M) et les compresseurs ($\Gamma_1$, $\Gamma_2$, $\Gamma_3$, $\Gamma_4$), des réservoirs thermo-isolés distincts ($X_1$, $X_2$, $X_3$, $Z_2$) et un circuit d'huile diathermique,

le système étant configuré pour commencer son fonctionnement mécaniquement ou électriquement par les compresseurs lorsqu'ils sont entraînés par de l'air comprimé haute pression entreposé dans les réservoirs étanches à l'air, après être déshydratés par des filtres presque totalement déshumidificateurs,
selon lequel lesdits réservoirs sont d'un type de bobine constituant un seul réservoir à serpentin (M), consistant en des tubes commerciaux ordinaires configurés pour résister en toute sécurité à des pressions supérieures à 150 bars, qui sont soudés localement en rangées parallèles,
les compresseurs ($\Gamma_1$, $\Gamma_2$, $\Gamma_3$, $\Gamma4$) étant configurés pour comprimer l'air atmosphérique à une pression élevée et le passer au réservoir à serpentin (M), les échangeurs de chaleur ($E_1$, $E_2$, $E_3$, $E_4$) étant configurés pour extraire au même moment la chaleur générée par compression par l'huile diathermique et l'eau, laquelle huile diathermique et l'eau sont stockées dans les réservoirs thermo-isolés ($X_1$, $X_2$, $X_3$, $Z_2$) et qui sont configurés pour extraire la chaleur produite par la compression de l'air avec un refroidissement de l'huile diathermique et de l'eau,
selon lequel le système présente en outre

- des échangeurs de chaleur ($\Theta_1$, $\Theta_2$, $\Theta_3$) entre le réservoir à serpentin (M) et la turbine à gaz (K), qui sont configurés pour transférer la chaleur de l'huile diathermique stockée dans les réservoirs thermo-isolés ($X_1$, $X_2$, $X_3$) à l'air qui est dirigé soit depuis le réservoir à serpentin (M), soit depuis la sortie de la turbine à gaz (K) à la turbine à gaz (K) et
- une ligne de liaison entre l'un des réservoirs thermo-isolés ($Z_2$) qui stockent de l'eau et la turbine à gaz (K), ladite ligne de liaison étant reliée à une autre ligne de liaison disposée entre l'un des autres échangeurs de chaleur ($\Theta_3$) et la turbine à gaz (K) de telle sorte qu'au dernier étage avant la détente finale de l'air dans la turbine à gaz (K) et après que l'air passe de l'un des autres échangeurs de chaleur ($\Theta_3$) et avant l'entrée de la turbine à gaz (K), de la vapeur stockée dans le réservoir isolé ($Z_2$) puisse être injectée dans le flux d'air provoquant le mélange de l'air et de la vapeur dans la direction de détente dans la turbine à gaz (K),

selon lequel le système est configuré de telle sorte que la détente au niveau de tous les étages amènera la turbine à gaz (K) à tourner et, par conséquent, à faire tourner un générateur relié à celui-ci produisant de l'électricité au niveau de ses bornes électriques de manière cumulative à partir de chaque étant conjointement avec l'étage de détente de vapeur et
selon lequel le système comprend en outre un réservoir pneumatique, un circuit pneumatique, une pompe configurée pour fournir aux échangeurs de chaleur de l'huile et de l'eau et une petite hélice couplée à un axe allongé de la pompe et configurée pour être entraînée par le circuit pneumatique de telle sorte qu'un écoulement forcé dans les circuits d'huile diathermique et d'eau soit assuré au moyen d'un réservoir pneumatique chargé par une branche du réservoir à serpentin à une pression inférieure à la pression du réservoir à serpentin.

2. Système automatique de stockage d'énergie éolienne et photovoltaïque pour une production d'électricité ininterrompue et une autonomie d'énergie selon la revendication 1, dans lequel le réservoir à serpentin (M) finit avec une barrière au niveau de son extrémité, selon lequel, perpendiculaires à celle-ci et selon une distance appropriée à partir de son extrémité et selon des distances appropriées se trouvent les échangeurs de chaleur nécessaires ($\Theta_1$,

$\theta_2$, $\theta_3$).

3. Système automatique de stockage d'énergie éolienne et photovoltaïque pour une production d'électricité ininterrompue et une autonomie d'énergie selon la revendication 1 ou 2, dans lequel le système est configuré de telle sorte que de l'air comprimé extrait du réservoir à serpentin (M) par le distributeur de flux fixé sur l'extrémité de ce réservoir, entre dans les échangeurs de chaleur respectifs ($\theta1$, $\theta2$, $\theta3$), recouvre la charge de chaleur provenant du flux inverse d'huile diathermique à température élevée et finit dans le collecteur d'air comprimé à une température maximale $T_1$ avant d'entrer dans la turbine (K).

4. Système automatique de stockage d'énergie éolienne et photovoltaïque pour une production d'électricité ininterrompue et une autonomie d'énergie selon l'une quelconque des revendications 1 à 3, dans lequel le système est configuré de telle sorte que l'air comprimé lorsqu'il sort du collecteur d'air comprimé, entre dans la turbine à gaz (K) et s'étend vers le bas à une pression et une température inférieures et que l'air partiellement détendu soit réchauffé à la température $T_1$ par l'huile chaude qui a été stockée dans un réservoir de stockage.

5. Système automatique de stockage d'énergie éolienne et photovoltaïque pour une production d'électricité ininterrompue et une autonomie d'énergie selon l'une quelconque des revendications 1 à 4, dans lequel l'arbre de la turbine à gaz à étages multiples (K) est équipé d'un dispositif de régulation de vitesse, qui fait fonctionner une vanne sur la tête de turbine à gaz pour moduler la puissance souhaitée de sorte à gérer l'introduction de l'alimentation en air comprimé à débit massique approprié correspondant à la sortie de la puissance souhaitée de telle sorte que la courbe de demande corresponde à la courbe d'offre.

6. Procédé de stockage d'une énergie éolienne et photovoltaïque pour une production d'énergie ininterrompue et une autonomie d'énergie utilisant des générateurs éoliens et/ou photovoltaïques qui commandent des compresseurs d'air ($\Gamma1$, $\Gamma2$, $\Gamma3$, $\Gamma4$) et une turbine à gaz à étages multiples (K) incluant les étapes de procédé suivantes consistant :

   i) à comprimer et à chauffer de l'air,
   ii) à diriger l'air chauffé à l'étape i) du procédé vers des échangeurs de chaleur et des saturateurs d'eau ($E_1$, $E_2$, $E_3$, $E_4$),
   iii) à chauffer de l'huile de refroidissement diathermique et de l'eau par les échangeurs de chaleur,
   iv) à stocker l'huile de refroidissement diathermique et l'eau chauffées à l'étape iii) du procédé dans des réservoirs isolés distincts ($H_1$, $H_2$, $H_3$, $Z_2$),
   v) après l'étape ii) du procédé, à conduire l'air dans un réservoir à bobine étanche aux gaz (M),
   vi) à conduire l'air depuis le réservoir à bobine étanche aux gaz (M) à travers un groupe d'échangeurs de chaleur ($\Theta_1$), dans lesquels l'huile de refroidissement diathermique chaude s'écoule en sens inverse, à réchauffer le long du chemin l'air comprimé avant qu'il n'entre dans un premier étage de la turbine à gaz à étages multiples (K) pour se détendre partiellement à une pression et une température ($T_2$) spécifiées,
   vii) après l'étape vi) du procédé, à diriger l'air à travers un second échangeur de chaleur de réchauffement $\Theta_2$), selon lequel le processus de réchauffement est presque isobare et augmente la température de l'air comprimé jusqu'à la température d'huile initiale ($T_1$),
   viii) après l'étape vii) du procédé, à diriger l'air à travers un second étage de turbine de la turbe à gaz à étages multiples,
   ix) à répéter l'étape vi) du procédé et à moins que l'air n'ait atteint le dernier étage de la turbine, à répéter également l'étape viii) du procédé,
   x) à injecter à l'intérieur d'une tête du dernier étage de la turbine une quantité d'eau saturée fournie par un réservoir isolé ($Z_2$) pour mélanger l'eau saturée avec l'air de sorte à former un mélange d'air humide qui se détend à l'intérieur du dernier étage de la turbine à gaz à étages multiples (K).

7. Procédé selon la revendication 6, dans lequel le mélange d'air humide est détendu à une pression d'environ 1:1 bar à une température de 38 °C.

8. Procédé selon les revendications 6 ou 7, dans lequel l'air comprimé sorti est utilisé pour un chauffage de district.

# FIGURE (1)

**EP 3 899 212 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2528449 A
- US 20110113781 A
- WO 2010125568 A
- WO 1008370 A